# EUROPEAN PATENT SPECIFICATION

(11) **EP 3 808 940 B1**
(45) Date of publication and mention of the grant of the patent: **22.02.2023**
(21) Application number: 20200859.5
(22) Date of filing: 08.10.2020
(51) Int. Cl.: F01D 5/18, F01D 5/28, F01D 9/06

(54) **CMC AIRFOIL FOR A GAS TURBINE ENGINE WITH COOLING HOLES**
CMC-SCHAUFEL FÜR EIN GASTURBINENTRIEBWERK MIT KÜHLLÖCHERN
SURFACE PORTANTE EN CMC POUR UN MOTEUR À TURBINE À GAZ COMPORTANT DES TROUS DE REFROIDISSEMENT

(30) Priority: 15.10.2019 US 201916653123
(43) Date of publication of application: 21.04.2021
(73) Proprietor: Raytheon Technologies Corporation, Farmington, CT 06032 (US)
(72) Inventor: GENERALE, Adam P., Dobbs Ferry, NY New York 10522 (US); DUBE, Bryan P., Columbia, CT Connecticut 06237 (US)
(74) Representative: Dehns

(56) References cited:
- EP-A1- 3 232 003
- EP-A2- 1 126 135
- EP-A2- 3 508 317
- US-A1- 2012 301 312
- US-A1- 2014 271 153
- US-A1- 2017 328 217

## Description

### TECHNICAL FIELD OF THE INVENTION

The present invention relates to an airfoil for a gas turbine engine as well as to a method for cooling an airfoil for a gas turbine engine.

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

The compressor section can include rotors that carry airfoils to compress the air entering the compressor section. A shaft may be coupled to the rotors to rotate the airfoils.

EP 1 126 135 A2 discloses a ceramic turbine airfoil with cooled trailing edge blocks.

US 2017/0328217 A1 discloses an airfoil formed from a ceramic matrix composite material having a cooling passage defined within the trailing edge portion proximate the suction side.

EP 3 508 317 A2 discloses a method for forming a passage in a ceramic matrix composite component.

US 2014/0271153 A1 discloses a ceramic matrix composite airfoil having a cooling fluid flow network.

### SUMMARY

According to a first aspect, the invention provides an airfoil as claimed in claim 1.

In a further embodiment of any of the foregoing embodiments, the cooling holes are arranged as a group in first and second radial rows, and the first and second radial rows are radially staggered.

In a further embodiment of any of the foregoing embodiments, the laminated ceramic matrix composite includes a silicon carbide matrix and silicon carbide fibers disposed in the silicon carbide matrix.

In a further embodiment of any of the foregoing embodiments, the cooling holes are at a location on the airfoil section that coincides with a peak temperature location.

From a further aspect, the invention provides a gas turbine engine as claimed in claim 5.

In a further embodiment of any of the foregoing embodiments, the low temperature region is at a non-gaspath region of the platform and the high temperature region is at a portion of the exterior combustion gaspath surface of the airfoil wall.

In a further embodiment of any of the foregoing embodiments, the laminated ceramic matrix composite includes a silicon carbide matrix and silicon carbide fibers disposed in the silicon carbide matrix.

In a further embodiment of any of the foregoing embodiments, the cooling holes are arranged as a group in first and second radial rows, and the first and second radial rows are radially staggered.

From a still further aspect, the invention provides a method for cooling an airfoil as claimed in claim 7.

In a further embodiment of any of the foregoing embodiments, a low temperature region is at a non-gaspath region of the platform and a high temperature region is at a portion of the exterior combustion gaspath surface of the airfoil wall.

In a further embodiment of any of the foregoing embodiments, the laminated ceramic matrix composite includes a silicon carbide matrix and silicon carbide fibers disposed in the silicon carbide matrix.

In a further embodiment of any of the foregoing embodiments, the cooling holes are arranged as a group in first and second radial rows, and the first and second radial rows are radially staggered.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates an airfoil of the engine.
Figure 3 illustrates a sections view through a portion of the airfoil.

### DETAILED DESCRIPTION

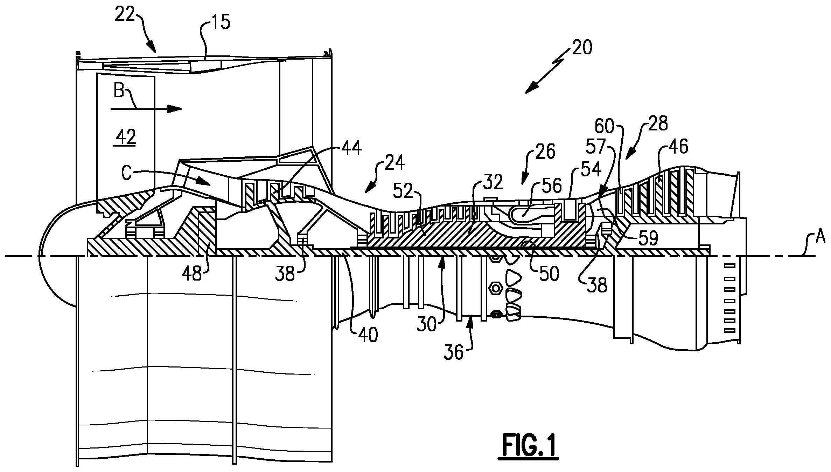

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. Terms such as "axial," "radial," "circumferential," and variations of these terms are made with reference to the engine central axis A. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5. The "Low corrected fan tip speed" as disclosed herein according to one non-limiting embodiment is less than about 1150 ft / second (350.5 meters/second).

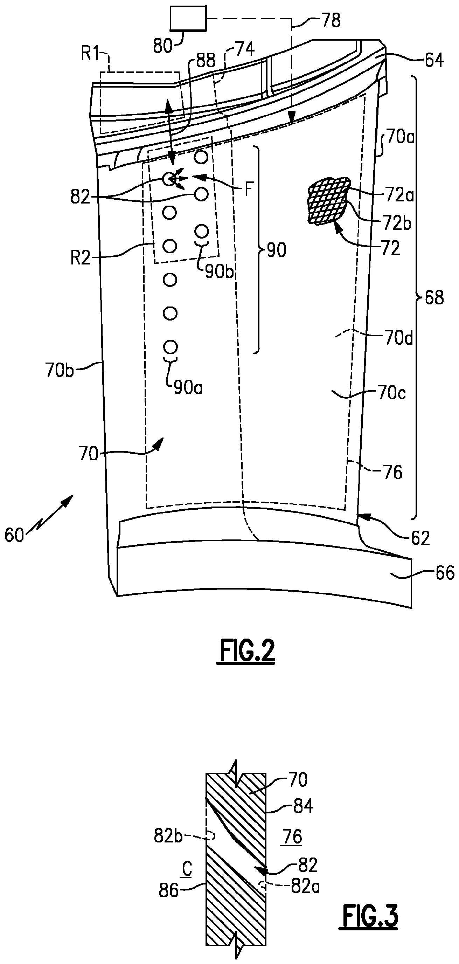

Figure 2 illustrates a representative airfoil 60 from the turbine section 28 of the engine 20. In this example, the airfoil 60 is a vane arc segment, although it is to be understood that the examples herein may also be applied to blades. A plurality of vane arc segments are situated in a circumferential row about the engine central axis A. The airfoil 60 is comprised of a continuous airfoil piece 62. The continuous airfoil piece 62 includes several sections, including first (outer) and second (inner) platforms 64/66 and an airfoil section 68 that extends between the first and second platforms 64/66. If the airfoil 60 were a blade, there would only be one platform. The airfoil section 68 is comprised of an airfoil wall 70 that defines a leading end 70a, a trailing end 70b, and pressure and suction sides 70c/70d.

The continuous airfoil piece 62 is formed of a laminated ceramic matrix composite 72, shown in a cutaway portion in Figure 2. For example, the laminated ceramic matrix composite 72 includes a ceramic matrix 72a and ceramic fibers 72b disposed in the ceramic matrix 72a. In one example, the ceramic matrix is silicon carbide (SiC) and the ceramic fibers are silicon carbide (SiC).

The laminated ceramic matrix composite 72 is comprised of fiber plies, one of which is represented schematically at 74, that are arranged in a stacked configuration and formed to the desired geometry of the airfoil piece 62. For instance, the fiber plies 74 may be layers or tapes that are laid-up one on top of the other to form the stacked configuration. The fiber plies 74 may be woven or unidirectional, for example. At least a portion of the fiber plies 74 are continuous through the first platform 64, the airfoil section 68, and the second platform 66. In this regard, the word "continuous" in the phrase "continuous airfoil piece" refers to the continuous airfoil piece 62 having fiber plies 74 that are uninterrupted through the first platform 64, the airfoil section 68, and the second platform 66.

The airfoil section 68 includes at least one internal passage 76. The configuration of the internal passage 76 is not particularly limited and may be a single central cavity, a sub-cavity, a serpentine passage, or the like. The internal passage 76 is connected by a cooling air line 78 to a source 80 of cooling air. For example, the source 80 of cooling air may be, but is not limited to, the compressor section 24, in which case the cooling air line 78 is a compressor bleed line.

The airfoil wall 70 includes a plurality of cooling holes 82. As shown in a representative view in Figure 3, the airfoil wall 70 has an interior surface 84 that borders the internal passage 76, and an exterior surface 86. The exterior surface 86 is a combustion gaspath surface in the core flow path C. The cooling holes 82 each span between first and second hole ends 82a/82b. The first hole end 82a opens at the interior surface 84 to the internal passage 76 and the second hole end 82b opens at the exterior surface 86 to the core gas path C. For example, the cooling holes 82 may be diffusion cooling holes that are flared, or additional advanced shapes.

In general, vanes formed of superalloys employ a thermal management strategy that involves cooling the vane as much as possible, to avoid exceeding the temperature limit of the superalloy and to limit effects of creep and fatigue, without much regard to thermally induced internal stresses as the superalloy strength/toughness enables this to be a secondary concern. This paradigm dictates use of many cooling holes arranged at locations that are designed to maximize cooling effectiveness. Ceramic materials, however, have higher maximum use temperatures in comparison to metallic superalloys. Therefore, vanes formed of ceramic materials have no need to employ the same thermal management strategy that is used for superalloy vanes.

Additionally, ceramic materials have significantly lower thermal conductivity than superalloys and do not possess the same strength and ductility characteristics, making them more susceptible to distress from thermal gradients and the thermally induced stresses those cause. For instance, although a portion of a ceramic vane may be exposed to the high temperatures in the core gas path, another portion of the ceramic vane that is not in the core gas path may be at a lower temperature due to the low thermal conductivity of the ceramic. This, in turn, may generate high thermal gradients that cause thermally induced stresses. While the high strength and toughness of superalloys permits resistance to thermal stresses, laminated ceramic matrix composites by comparison are more prone to distress from thermal stress. Thermal stresses may cause distress at relatively weak locations, such as interlaminar interfaces between fiber plies where there are no fibers carrying load. Additionally, some laminated ceramic matrix composites, such as SiC/SiC composites in which the matrix is formed by chemical vapor infiltration, may have residual porosity that may be subject to distress from thermal stresses. Therefore, although maximum cooling may be desirable for superalloy vanes, maximized cooling of a ceramic vane, particularly laminated ceramic matrix composites and composites with residual porosity, may exacerbate thermal gradients and thus be counter-productive to meeting durability goals. In this regard, the cooling holes 82 of the airfoil 60 are configured to establish a desired thermal gradient rather than maximize cooling.

For example, during operation of the engine 20 the airfoil piece 62 has low and high temperature regions. Most typically, the high or highest temperature regions are those regions that are exposed in the core gaspath C, and the low or lowest temperature regions are those that are outside of the core flow path C. For instance, as shown in Figure 2, the airfoil piece 62 has a low temperature region R1 and a high temperature region R2. In this example, the low temperature region R1 is at a non-gaspath region of the first platform 64. The low temperature region R1 may include, for example, the radially outer portion of the first platform and features that are on the radially outer side of the first platform, such as flanges, rails, hooks, or the like.

The high temperature region R2 is at a portion of the exterior combustion gaspath surface 86 of the airfoil wall 70. As an example, the high temperature region R2 may be exposed to temperatures of approximately 1400F to 2800F (about 760C to 1538C) in the core flow path C. The temperature at the low temperature region R1 by comparison may be approximately up to 1000F (about 538C) colder. In one example, the high temperature region R2 coincides with a peak temperature location across the airfoil section 68. A peak temperature location is a location of the airfoil section 68 that is exposed to higher temperatures than surrounding areas of the airfoil section 68. A peak temperature location may be determined, for example, by experiment or by computer simulation to generate a temperature profile which can be used to identify peak temperature locations. In some examples, the temperature profile may correspond to cruise conditions or maximum thrust conditions.

As discussed above, such thermal gradients in laminated ceramic matrix composites may cause thermal stress and distress at interlaminar interfaces. To reduce the thermal gradient, and thus facilitate a reduction in thermal stresses in the laminated ceramic matrix composite 72, cooling air is provided from the source 80, through the air line 78, and into the internal passage 76. The internal passage 76 feeds the cooling air to the cooling holes 82. The cooling holes 82 discharge the cooling air at the exterior surface 86, where the cooling air serves to form a cooling air film, as generally represented at F (Figure 2), across at least a portion of the exterior surface 86.

The cooling air film F cools the airfoil wall 70 in the immediate vicinity of the cooling holes 82, as well areas that are closely adjacent the cooling holes 82. For instance, in the illustrated example, the cooling holes 82 are in close proximity to the first platform and may thus serve to reduce the temperature in the high temperature region R2 as well as the adjacent portion of the first platform 64 and fillet area between the first platform 64 and the airfoil section 68. The region R1, fillet area, and first platform 64, being formed of the laminated ceramic matrix composite 72, do not require cooling to lower the temperature below a maximum use temperature. Rather, the cooling holes 82 are designed to establish a thermal gradient, as represented generally at 88, between the regions R1/R2 to be within a temperature difference of no more than 300°C and in further examples no more than 250°C, 200°C, 150°C, or 100°C. In the illustrated example, this means that the difference in temperature across the portion of the airfoil piece 62 from region R2 to region R1 (e.g., inclusive of the fillet area in this example) is no more than 150°C.

In the illustrated embodiment of the invention, the cooling holes 82 are located in the aft 50% of the length of the airfoil section 68 and in the radially outer 50% of the height (span) of the airfoil section (from the second platform 66 to the first platform 64). Collectively, the aft 50% and the radially outer 50% may be referred to as the 50%/50% zone. In particular, the 50%/50% zone of the airfoil section 68 may be exposed to the highest temperatures in the temperature profile and may thus be the location where there is likely to be the greatest thermal gradient relative to the cooler, adjacent first platform 64. By utilizing the cooling holes in the 50%/50% zone the thermal gradient between regions R1 and R2 may be limited to a temperature difference of no more than 150°C.

The cooling holes 82 may also be arranged as a group, as represented generally at 90. In this example, the group 90 includes a first radial row 90a of the cooling holes 82 and a second radial row 90b of the cooling holes 82 that may be radially staggered from the first radial row 90a. A "row" includes cooling holes 82 that lie on a common straight line, in this case in the radial direction. As an example, the breakout points of the cooling holes 82 at the surface of the airfoil section 68 are all on a common straight line for each respective row 90a/90b. Alternatively, at least a portion of the cooling holes 82 lie on a common straight line for each respective row 90a/90b. The staggering of the rows 90a/90b may facilitate augmenting the film effectiveness due to the super-positioning of ejected film with considerations for the minimum permissible distance between cooling holes. Additionally, the first row 90a may be radially longer and contain a higher number of cooling holes 82 than the second row 90b. Such a configuration may be used to provide a higher number of the cooling holes 82 at a location that coincides with the highest temperatures in the region R2, while other locations where the temperature is not quite as high may have fewer of the cooling holes 82.

As will be appreciated from this disclosure, the size, number, and location of the cooling holes 82 can be configured in cooperation with other factors, such as the temperature and flow rate of the cooling air and the temperatures of the regions R1/R2, to attain the temperature difference no more than 150°C. It is to be further appreciated that the cooling holes 82 and examples herein may also be applied between other or additional low and high temperature regions of the airfoil 60 that exceed target thermal gradients, such as but not limited to, between radially adjacent low and high temperature regions on the airfoil section 68, between axially adjacent low and high temperature regions on the airfoil section 68, or between low and high temperature regions on the airfoil section 68 and second platform 66.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the scope of the invention. The scope of legal protection given to this invention can only be determined by studying the following claims.

## Claims

1. An airfoil (60) for a gas turbine engine, the airfoil comprising:
a continuous airfoil piece (62) formed of a laminated ceramic matrix composite, the continuous airfoil piece (62) defining a platform (64, 66) and an airfoil section (68) extending adjacent the platform (64, 66) and having fiber plies that are uninterrupted through at least the platform (64, 66) and the airfoil section (68), the airfoil section (68) including,
at least one internal passage (76), and
an airfoil wall (70) having an interior surface (84) bordering the at least one internal passage (76), an exterior, combustion gaspath surface (86), and a plurality of cooling holes (82), each said cooling hole spanning between first (82a) and second (82b) hole ends, the first hole end (82a) opening at the interior surface (84) to the at least one internal passage (76) and the second hole end (82b) opening at the exterior surface,
**characterised in that** the cooling holes are in an aft 50% of the length of the airfoil section (68) and in a radially outer 50% of the airfoil section (68).

2. The airfoil (60) as recited in claim 1, wherein the cooling holes are arranged as a group in first (90a) and second (90b) radial rows, and the first (90a) and second (90b) radial rows are radially staggered.

3. The airfoil (60) as recited in claim 1 or 2, wherein the laminated ceramic matrix composite includes a silicon carbide matrix and silicon carbide fibers disposed in the silicon carbide matrix.

4. The airfoil (60) as recited in any preceding claim, wherein the cooling holes are at a location on the airfoil section (68) that coincides with a peak temperature location.

5. A gas turbine engine (20) comprising:
a source of cooling air;
a combustor (56) for providing combustion gases;
a turbine section (28) for receiving the combustion gases, the turbine section (28) having an airfoil (60) as claimed in any preceding claim,
the at least one internal passage (76) being configured to receive the cooling air; and
a thermal gradient established by the cooling air discharged from the cooling holes to be within a temperature difference of no more than 300°C between a low temperature region (R1) of the airfoil piece and a high temperature region (R2) of the airfoil section (68).

6. The gas turbine engine (20) as recited in claim 5, wherein the low temperature region (R1) is at a non-gaspath region of the platform (64, 66) and the high temperature region (R2) is at a portion of the exterior combustion gaspath surface of the airfoil wall (70).

7. A method for cooling an airfoil (60) for a gas turbine engine,
the method comprising:
providing an airfoil (60) that includes a continuous airfoil piece (62) formed of a laminated ceramic matrix composite, wherein the continuous airfoil piece (62) defines a platform (64, 66) and an airfoil section (68) adjacent the platform (64, 66) and having fiber plies that are uninterrupted through at least the platform (64, 66) and the airfoil section (68), the airfoil section (68) includes at least one internal passage (76) and an airfoil wall (70) that has an interior surface (84) borders the at least one internal passage (76), an exterior, combustion gaspath surface (86), and a plurality of cooling holes (82), each said cooling hole spans between first (82a) and second (82b) hole ends, the first hole end (82a) opens at the interior surface (84) to the at least one internal passage (76) and the second hole end (82b) opens at the exterior surface; and
establishing a thermal gradient between a low temperature region (R1) of the airfoil piece and a high temperature region (R2) of the airfoil section (68) to be within a temperature difference of no more than 300°C by providing cooling air to the internal passage and then through the cooling holes, the cooling air discharging as a cooling film on the airfoil section (68),
**characterised in that** the cooling holes are in an aft 50% of the length of the airfoil section (68) and in a radially outer 50% of the airfoil section (68).

8. The method as recited in claim 7, wherein a low temperature region (R1) is at a non-gaspath region of the platform (64, 66) and a high temperature region (R2) is at a portion of the exterior combustion gaspath surface of the airfoil wall (70).

9. The method as recited in claim 7 or 8, wherein the laminated ceramic matrix composite includes a silicon carbide matrix and silicon carbide fibers disposed in the silicon carbide matrix.

10. The method as recited in any of claims 7 to 9, wherein the cooling holes are arranged as a group in first (90a) and second (90b) radial rows, and the first (90a) and second (90b) radial rows are radially staggered.

## Patentansprüche

1. Schaufel (60) für ein Gasturbinentriebwerk, wobei die Schaufel umfasst:
ein durchgehendes Schaufelstück (62), das aus einem laminierten Keramikmatrixverbundstoff gebildet ist, wobei das durchgehende Schaufelstück (62) eine Plattform (64, 66) und einen Schaufelabschnitt (68) definiert, der sich angrenzend an die Plattform (64, 66) erstreckt und Faserlagen aufweist, die durch mindestens die Plattform (64, 66) und den Schaufelabschnitt (68) ununterbrochen sind, wobei der Schaufelabschnitt (68) mindestens einen internen Durchgang (76) und
eine Schaufelwand (70), die eine Innenoberfläche (84), die an den mindestens einen Innenkanal (76) grenzt, eine äußere Verbrennungsgaswegoberfläche (86) und eine Vielzahl von Kühllöchern (82) aufweist, wobei sich jedes Kühlloch zwischen einem ersten (82a) und einem zweiten (82b) Lochende erstreckt, wobei sich das erste Lochende (82a) an der Innenoberfläche (84) zu dem mindestens einen inneren Durchgang (76) öffnet und sich das zweite Lochende (82b) an der äußeren Oberfläche öffnet, einschließt,
**dadurch gekennzeichnet, dass** sich die Kühllöcher in hinteren 50 % der Länge des Schaufelabschnitts (68) und in radial äußeren 50 % des Schaufelabschnitts (68) befinden.

2. Schaufel (60) nach Anspruch 1, wobei die Kühllöcher als eine Gruppe in ersten (90a) und zweiten (90b) radialen Reihen angeordnet sind und die ersten (90a) und zweiten (90b) radialen Reihen radial gestaffelt sind.

3. Schaufel (60) nach Anspruch 1 oder 2, wobei der laminierte Keramikmatrixverbundstoff eine Siliziumkarbidmatrix und Siliziumkarbidfasern einschließt, die in der Siliziumkarbidmatrix angeordnet sind.

4. Schaufel (60) nach einem der vorhergehenden Ansprüche, wobei sich die Kühllöcher an einer Stelle auf dem Schaufelabschnitt (68) befinden, die mit einer Höchsttemperaturstelle zusammenfällt.

5. Gasturbinentriebwerk (20), umfassend:
eine Kühlluftquelle;
eine Brennkammer (56) zum Bereitstellen von Verbrennungsgasen; einen Turbinenabschnitt (28) zum Aufnehmen der Verbrennungsgase, wobei der Turbinenabschnitt (28) eine Schaufel (60) nach einem der vorhergehenden Ansprüche aufweist,
wobei der mindestens eine interne Durchgang (76) so konfiguriert ist, dass er die Kühlluft aufnimmt; und
einen Wärmegradienten, der durch die aus den Kühllöchern abgegebene Kühlluft eingeführt wird, der innerhalb einer Temperaturdifferenz von nicht mehr als 300 °C zwischen einem Niedertemperaturbereich (R1) des Schaufelstücks und einem Hochtemperaturbereich (R2) des Schaufelabschnitts liegt (68).

6. Gasturbinentriebwerk (20) nach Anspruch 5, wobei sich der Niedertemperaturbereich (R1) in einem Nicht-Gaswegbereich der Plattform (64, 66) befindet und sich der Hochtemperaturbereich (R2) in einem Abschnitt der äußeren Verbrennungsgaswegoberfläche der Schaufelwand (70) befindet.

7. Verfahren zum Kühlen einer Schaufel (60) für ein Gasturbinentriebwerk, wobei das Verfahren umfasst:
Bereitstellen einer Schaufel (60), das ein durchgehendes Schaufelstück (62) einschließt, das aus einem laminierten Keramikmatrixverbundstoff gebildet ist, wobei das durchgehende Schaufelstück (62) eine Plattform (64, 66) und einen Schaufelabschnitt (68) angrenzend an die Plattform ( 64, 66) definiert und Faserlagen aufweist, die durch mindestens die Plattform (64, 66) und den Schaufelabschnitt (68) ununterbrochen sind, wobei der Schaufelabschnitt (68) mindestens einen inneren Durchgang (76) und eine Schaufelwand (70), die eine Innenoberfläche (84) aufweist, die an den mindestens einen inneren Durchgang (76) grenzt, eine äußere Verbrennungsgaswegoberfläche (86) und eine Vielzahl von Kühllöchern (82) einschließt, wobei sich jedes Kühlloch zwischen einem ersten (82a) und einem zweiten (82b) Lochende erstreckt, wobei sich das erste Lochende (82a) an der Innenoberfläche (84) zu dem mindestens einen inneren Durchgang (76) öffnet und sich das zweite Lochende (82b) an der Außenoberfläche öffnet; und
Einführen eines Wärmegradienten zwischen einem Niedrigtemperaturbereich (R1) des Schaufelstücks und einem Hochtemperaturbereich (R2) des Schaufelabschnitts (68) innerhalb einer Temperaturdifferenz von nicht mehr als 300 °C, indem Kühlluft einem internen Durchgang und dann durch die Kühllöcher bereitgestellt wird, wobei die Kühlluft als Kühlfilm an dem Schaufelabschnitt (68) austritt,
**dadurch gekennzeichnet, dass** sich die Kühllöcher in hinteren 50 % der Länge des Schaufelabschnitts (68) und in radial äußeren 50 % des Schaufelabschnitts (68) befinden.

8. Verfahren nach Anspruch 7, wobei sich ein Niedertemperaturbereich (R1) in einem Nicht-Gaswegbereich der Plattform (64, 66) befindet und sich ein Hochtemperaturbereich (R2) in einem Abschnitt der äußeren Verbrennungsgaswegoberfläche der Schaufelwand (70) befindet.

9. Verfahren nach Anspruch 7 oder 8, wobei der laminierte Keramikmatrixverbundstoff eine Siliziumkarbidmatrix und Siliziumkarbidfasern einschließt, die in der Siliziumkarbidmatrix angeordnet sind.

10. Verfahren einem der Ansprüche 7 bis 9, wobei die Kühllöcher als eine Gruppe in ersten (90a) und zweiten (90b) radialen Reihen angeordnet sind und die ersten (90a) und zweiten (90b) radialen Reihen radial gestaffelt sind.

## Revendications

1. Profil aérodynamique (60) pour un moteur à turbine à gaz, le profil aérodynamique comprenant :
une pièce de profil aérodynamique continue (62) formée d'un composite à matrice céramique stratifié, la pièce de profil aérodynamique continue (62) définissant une plateforme (64, 66) et une section de profil aérodynamique (68) s'étendant adjacente à la plateforme (64, 66) et ayant des nappes fibreuses qui sont ininterrompues à travers au moins la plateforme (64, 66) et la section de profil aérodynamique (68), la section de profil aérodynamique (68) comportant,
au moins un passage interne (76), et
une paroi de profil aérodynamique (70) ayant une surface intérieure (84) bordant l'au moins un passage interne (76), une surface extérieure de trajet de gaz de combustion (86) et une pluralité de trous de refroidissement (82), chacun desdits trous de refroidissement s'étendant entre une première (82a) et une seconde (82b) extrémité de trou, la première extrémité de trou (82a) s'ouvrant au niveau de la surface intérieure (84) vers l'au moins un passage interne (76) et la seconde extrémité de trou (82b) s'ouvrant au niveau de la surface extérieure,
**caractérisé en ce que** les trous de refroidissement se trouvent dans un arrière à 50 % de la longueur de la section de profil aérodynamique (68) et dans un extérieur radial à 50 % de la section de profil aérodynamique (68).

2. Profil aérodynamique (60) selon la revendication 1, dans lequel les trous de refroidissement sont disposés en groupe dans des première (90a) et seconde (90b) rangées radiales, et les première (90a) et seconde (90b) rangées radiales sont radialement décalées.

3. Profil aérodynamique (60) selon la revendication 1 ou 2, dans lequel le composite à matrice céramique stratifié comporte une matrice de carbure de silicium et des fibres de carbure de silicium disposées dans la matrice de carbure de silicium.

4. Profil aérodynamique (60) selon une quelconque revendication précédente, dans lequel les trous de refroidissement sont à un emplacement sur la section de profil aérodynamique (68) qui coïncide avec un emplacement de température maximale.

5. Moteur à turbine à gaz (20) comprenant :
une source d'air de refroidissement ;
une chambre de combustion (56) pour fournir des gaz de combustion ;
une section de turbine (28) pour recevoir les gaz de combustion, la section de turbine (28) ayant un profil aérodynamique (60) selon une quelconque revendication précédente,
l'au moins un passage interne (76) étant configuré pour recevoir l'air de refroidissement ; et
un gradient thermique établi par l'air de refroidissement déchargé des trous de refroidissement pour se situer à l'intérieur d'une différence de température ne dépassant pas 300 °C entre une région à basse température (R1) de la pièce de profil aérodynamique et une région à haute température (R2) de la section de profil aérodynamique (68).

6. Moteur à turbine à gaz (20) selon la revendication 5, dans lequel la région à basse température (R1) se situe dans une région sans trajet de gaz de la plateforme (64, 66) et la région à haute température (R2) se situe dans une partie de la surface extérieure de trajet de gaz de combustion de la paroi de profil aérodynamique (70).

7. Procédé de refroidissement d'un profil aérodynamique (60) pour un moteur à turbine à gaz, le procédé comprenant :
la fourniture d'un profil aérodynamique (60) qui comporte une pièce de profil aérodynamique continue (62) formée d'un composite à matrice céramique stratifié, dans lequel la pièce de profil aérodynamique continue (62) définit une plateforme (64, 66) et une section de profil aérodynamique (68) adjacente à la plateforme (64, 66) et ayant des nappes fibreuses qui sont ininterrompues à travers au moins la plateforme (64, 66) et la section de profil aérodynamique (68), la section de profil aérodynamique (68) comporte au moins un passage interne (76) et une paroi de profil aérodynamique (70) qui a une surface intérieure (84) bordant l'au moins un passage interne (76), une surface extérieure de trajet de gaz de combustion (86) et une pluralité de trous de refroidissement (82), chacun desdits trous de refroidissement s'étendant entre la première (82a) et la seconde (82b) extrémité de trou, la première extrémité de trou (82a) s'ouvrant au niveau de la surface intérieure (84) vers l'au moins un passage interne (76) et la seconde extrémité de trou (82b) s'ouvrant au niveau de la surface extérieure ; et
l'établissement d'un gradient thermique entre une région à basse température (R1) de la pièce de profil aérodynamique et une région à haute température (R2) de la section de profil aérodynamique (68) pour se situer à l'intérieur d'une différence de température ne dépassant pas 300 °C en fournissant de l'air de refroidissement au passage interne puis à travers les trous de refroidissement, l'air de refroidissement s'évacuant sous forme de film de refroidissement sur la section de profil aérodynamique (68),
**caractérisé en ce que** les trous de refroidissement se trouvent dans un arrière à 50 % de la longueur de la section de profil aérodynamique (68) et dans un extérieur à 50 % de la section de profil aérodynamique (68).

8. Procédé selon la revendication 7, dans lequel une région à basse température (R1) se situe dans une région sans trajet de gaz de la plateforme (64, 66) et une région à haute température (R2) se situe dans une partie de la surface extérieure de trajet de gaz de combustion de la paroi de profil aérodynamique (70).

9. Procédé selon la revendication 7 ou 8, dans lequel le composite à matrice céramique stratifié comporte une matrice de carbure de silicium et des fibres de carbure de silicium disposées dans la matrice de carbure de silicium.

10. Procédé selon l'une quelconque des revendications 7 à 9, dans lequel les trous de refroidissement sont disposés en groupe dans des première (90a) et seconde (90b) rangées radiales, et les première (90a) et seconde (90b) rangées radiales sont radialement décalées.
